# EUROPEAN PATENT APPLICATION

(11) **EP 4 811 210 A1**
(43) Date of publication of application: **23.09.2026**
(21) Application number: 25164890.3
(22) Date of filing: 19.03.2025
(51) Int. Cl.: G06K 7/10

(54) **MODULAR SYSTEM AND METHOD FOR IDENTIFICATION SENSING**

(71) Applicant: ecom instruments GmbH, 97959 Assamstadt (DE)
(72) Inventor: HARTLEB, Jörg, 68307 Mannheim (DE)
(74) Representative: Tergau & Walkenhorst Intellectual Property GmbH

(57) **Abstract**

According to the invention, a modular system (1) for identification sensing, comprising
- a sensor (2) comprising an AIDC (Automatic Identification and Data Capture) unit,
- a holding device (4) configured to inherently and removably accommodate different sensor (2) designs,

wherein the holding device (4) holds the sensor (2), and
wherein the holding device (4) comprises a removably attachable grip element (6), is disclosed.

Furthermore, a method for identification sensing is disclosed.

## Description

### TECHNICAL FIELD

The present invention relates to a modular system for identification sensing, the use of a modular system for identification sensing, a method for identification sensing, a method for manufacturing a holding device suitable for use with a modular system for identification sensing and a holding device preferably suitable for use with a modular system configured for identification sensing.

### BACKGROUND

Sensors used for data collection and automatic identification (Auto-ID), e.g. barcode scanners, RFID readers, and optical recognition devices, enable real-time identification, tracking, and data processing by capturing information from inter alia objects, tags, or codes.

These sensors can be used in the hand and common types include barcode scanners, RFID readers, and optical recognition devices.

Depending on the technology used, these sensors can read visual codes such as barcodes and QR codes, detect and process radio signals from RFID tags, or capture images for optical character recognition (OCR) and pattern matching. Advanced versions may incorporate additional technologies such as Near Field Communication (NFC), LiDAR, or ultrasonic sensing to enhance precision and expand application possibilities.

Typically, those sensors are securely integrated into a housing with a built-in holder to ensure optimal operability.

The sensors are also typically enclosed in a sturdy housing that provides protection from external damage, dust, and moisture. The housing includes a holder that keeps the sensors in a fixed position, allowing for precise and consistent operation.

The fixed sensor with an integrated handle is designed to offer a stable and user-friendly experience. The handle provides a secure and comfortable grip, making it easy for users to operate the sensor during tasks such as scanning barcodes or reading RFID tags. This stability ensures precise and consistent data collection, reducing the likelihood of errors.

However, this design comes with some limitations. The fixed handle means that the device is relatively rigid and not easily adaptable to different scenarios. It is primarily designed for stationary or limited-movement applications, where the user can maintain a consistent position while operating the sensor. Additionally, having a small display or user interface (also through the housing) can be a disadvantage, as it may limit the visibility and accessibility of information. This can make it more challenging to navigate and operate the device efficiently, especially in complex or data-intensive tasks.

In mobile applications, where portability and mobility are essential, this design also falls short. Users often need to move around freely, carrying the sensor with them to different locations. A fixed handle can be cumbersome and may restrict the user's movement. Additionally, the rigid design may not fit well in various environments, such as tight spaces or when the user needs to quickly switch between different tasks.

Alternatively to that, those sensors, such as scanners, can be integrated into mobile devices or be used without any further case with a handle. This allows for portable and convenient use, especially when a bigger display as given by the mobile device is needed, enabling users to perform identification and data collection tasks on the go. Mobile devices with built-in sensors or standalone sensors without any further case with a handle can scan barcodes, RFID tags, or optical codes, providing real-time data processing and tracking capabilities.

However, the integration of sensors into mobile devices or the use of such standalone sensors comes with certain drawbacks. One significant disadvantage is the absence of an ergonomic handle. Without a dedicated handle, the user must hold and operate the entire mobile device, which can become cumbersome over extended periods, meaning all the time when it is in use.

The lack of an ergonomic grip means that prolonged use may lead to discomfort or even strain in the user's hand and wrist. This can reduce efficiency and accuracy in data collection tasks, especially in environments where frequent scanning or identification is required. The handling of the device becomes challenging, particularly in scenarios that demand quick and repetitive actions.

This challenge highlights the need for a sensor, which overcomes this disadvantage by providing a more ergonomically handleable sensor.

### SUMMARY

The object of the present invention is therefore to provide a sensor and a method for sensing, which overcome this disadvantage by providing a more ergonomically handleable sensor.

According to the invention, the object is met by a modular system for identification sensing according to claim 1 and by a method for identification sensing specified in claim 12.

Therefore, a modular system for identification sensing is proposed by the invention, comprising
- a sensor comprising an AIDC (Automatic Identification and Data Capture) unit,
- a holding device configured to inherently and removably accommodate different sensor designs,
wherein the holding device holds the sensor, and wherein the holding device comprises a removably attachable grip element.

This system provides versatility, as for various application scenarios, only the accessories need to be exchanged, which eliminates the need for different specialized solutions for each application. This adaptation reduces costs and increases efficiency. Additionally, the interchangeability of components ensures that highly used parts, such as the grip, can be easily replaced when necessary.

Another benefit is performance variability. Scanners with different performance levels can be integrated into the same housing, allowing users to select the most appropriate scanner for their specific needs.

The sensor in this modular system could be a variety of types, depending on the different identification and data capture purposes. The sensor could e.g. be a barcode scanner, RFID reader, an optical recognition device, a QR code scanner, an NFC sensor, a LiDAR sensor, or a ultrasonic sensor.

An AIDC (Automatic Identification and Data Capture) unit is a technology system that automatically identifies objects, collects data about them, and inputs that data directly into computer systems without human intervention. It encompasses various components and technologies such as barcodes, RFID (Radio Frequency Identification), Optical Character Recognition (OCR), magnetic stripes, biometric systems, and smart cards. The AIDC unit basically captures data from various sensors, such as barcode scanners, RFID readers, or OCR systems, and converts it into a digital format. This digital data is then transmitted to a connected computer system or storage device via wired or wireless connections. The computer system processes the data as needed, and finally, the processed data is stored in a database or storage solution for easy access, retrieval, and analysis.

The holding device is designed to securely and removably accommodate various sensor designs. It may comprise a combination of high-durability plastic, rubber or silicone inserts for cushioning and grip, and metal components for strength. High-durability plastics, such as ABS (Acrylonitrile Butadiene Styrene) or polycarbonate, offer strength, lightweight properties and may be comprised in the holding device as materials.

Furthermore, it may comprise adjustable clamps or locking mechanisms ensuring a secure fit for different sensors. It can have an ergonomic shape for comfortable handling. An ergonomic shape might include a contoured grip that fits in the hand, reducing strain during use. It could also feature soft-touch surfaces to enhance comfort and prevent slipping. Additionally, the device might be designed to distribute weight evenly, minimizing fatigue and ensuring a more balanced and stable feel during operation.

The holding device includes a removable grip element for added flexibility. This grip element can come in an ergonomic shape that fits in the hand with curves and contours matching the shape of the fingers and palm. In terms of materials, silicone, rubber, thermoplastic elastomers (TPE) or foam might be used for the grip element.

In an embodiment of the invention, the modular system for identification sensing may further comprise a mobile device comprising a user interface, a gateway and an AIDC unit, wherein the holding device may further be configured to inherently and removably accommodate different mobile device designs, wherein the holding device may be configured to hold the mobile device, and wherein the sensor and the mobile device may be configured to communicate via AIDC units.

Thus, the holding device securely holds the mobile device, ensuring stable operation and reducing the risk of the device falling or getting damaged. Additionally, with both devices held in the holding device, one hand is free for other tasks.

Furthermore, with this, the holding device ensures flexibility and compatibility with various types of mobile devices. This modular approach also offers investment security, as it can be adapted to new smartphones by simply changing the smartphone holder. This adaptability extends to smartphones from different manufacturers, providing manufacturer independence and further flexibility.

The sensor and mobile device communicate through Automatic Identification and Data Capture (AIDC) units, providing data transfer and seamless integration. This connection ensures that data is efficiently shared between the sensor and the mobile device. Additionally, the use of AIDC units enhances data security by protecting data transfers from potential interception or tampering, ensuring the integrity and confidentiality of the data being transferred.

The inclusion of a mobile device with a user interface allows for easy interaction and control of the system, which provides a good user experience. Users can access system functions and settings through the mobile device's interface, streamlining operations and reducing the need for an extra training. The user interface can display real-time data, provide feedback, and guide users through processes. Additionally, the mobile device can offer customization options, enabling users to tailor the system to their specific needs and preferences.

Furthermore, the mobile device's gateway feature provides a means to connect and transmit data from the sensor to other systems or networks, facilitating broader integration and functionality.

In an embodiment of the invention, in the modular system for identification sensing, the holding device may further be subdivided into a part configured to hold the sensor and another configured to hold the mobile device, which may be joined using a detachable connection.

By subdividing the holding device into a part configured to hold the sensor and another part configured to hold the mobile device, which are joined using a detachable connection, the system gains enhanced flexibility. Users can switch out or upgrade individual components without needing to replace the entire system.

This modularity also provides an ease of maintenance, as specific parts can be repaired or replaced without affecting the whole device.

The system's customizability allows users to select different sensors or mobile devices based on their specific needs.

Implementation options for the detachable connection include detachable clips for secure yet removable connections, magnetic connectors for quick assembly, screws for sturdy connections, snap-fit designs for tool-free convenience, and latches for secure and easy detachment.

Furthermore, the sensor may be removably mounted on one holding device, while the mobile device may be removably mounted on another holding device. The sensor and the mobile device may communicate with each other via NFC units, ensuring efficient and secure data exchange.

In an embodiment of the invention, in the modular system for identification sensing, the gateway may be a WLAN (Wireless Local Area Network)and/or WWAN (Wireless Wide Area Network) gateway.

WLAN stands for Wireless Local Area Network. It allows devices to connect and communicate within a local area, such as a home, office, or campus, using wireless signals, whereas WWAN stands for Wireless Wide Area Network. It enables devices to connect to the internet over a broader area, such as a city or even a country, using mobile network technologies like 4G or 5G. WWAN offers connectivity beyond the range of a WLAN, making it suitable for mobile and remote applications.

WLAN gateways enable high-speed data transfer, while WWAN gateways offer connectivity over large areas or remote locations. This scalability allows the system to accommodate additional devices and sensors without greater changes to the infrastructure, reducing installation and maintenance costs.

A hybrid solution using both WLAN and WWAN gateways can provide high-speed local connectivity and long-range communication.

In an embodiment of the invention, in the modular system for identification sensing, the AIDC unit of the sensor may be a short-range wireless technology-enabled AIDC unit, preferably a Bluetooth low energy AIDC unit.

A short-range wireless technology-enabled AIDC (Automatic Identification and Data Capture) unit is a device that uses wireless communication to identify, capture, and transmit data within a limited range and can rely on technologies like Bluetooth, RFID (Radio Frequency Identification), or NFC (Near Field Communication) to communicate wirelessly with other devices.

A Bluetooth Low Energy (BLE) AIDC (Automatic Identification and Data Capture) unit is a device that uses Bluetooth Low Energy technology for wireless communication to identify, capture, and transmit data. BLE is a power-efficient version of Bluetooth designed for applications requiring periodic or low-data-rate transmissions. BLE AIDC units are ideal for devices that need to operate for long periods on small batteries, as its power consumption is low, thus prolonging the battery life of the system and reducing the need for frequent charging.

There are some implementation options for the short-range wireless technology-enabled AIDC unit: one option is to integrate the short-range wireless technology-enabled AIDC unit directly into the sensor. This gives a seamless communication without the need for additional components. Another option is to use an external short-range wireless technology-enabled module that can be attached to the sensor as needed. This provides flexibility in upgrading or replacing the short-range wireless technology-enabled technology. A third option is to employ a hybrid approach, where the short-range wireless technology-enabled AIDC unit is partially integrated into the sensor and partially external, combining the benefits of both fixed and modular designs.

Additionally, the short-range wireless technology-enabled AIDC unit can support multiple communication protocols, enhancing compatibility with a wide range of devices and systems.

In the embodiment of the invention, in the modular system for identification sensing, the AIDC unit of the mobile device may be a short-range wireless technology -enabled AIDC unit, preferably a Bluetooth low energy AIDC unit.

What has been said before about the AIDC unit of the sensor, can, conversely, be applied to the AIDC unit of the mobile device.

In an embodiment of the invention, in the modular system for identification sensing, the grip element of the holding device may have a pistol grip shape configured to facilitate the handling of the modular system.

A pistol grip shape is a design commonly found in tools and devices where the handle resembles the grip of a handgun. This shape is characterized by an ergonomic contour that fits naturally into the hand, allowing for a comfortable and secure hold. The grip usually has a distinct angle that positions the hand in a more natural posture, which helps improve control and reduces strain during use.

In an embodiment of the invention, in the modular system for identification sensing, the system may comply with explosion protection standards / regulation.

Explosion protection standards and regulations are guidelines and requirements made to ensure the safety of equipment and personnel in environments where there is a risk of explosions. These standards aim to prevent ignition sources from causing explosions in hazardous areas.

Applicable standards include e.g. ATEX (ATmosphères EXplosibles), a European Union directive that applies to equipment used in explosive atmospheres, including the ATEX product directive 2014/34/EU and the ATEX workplace directive 1999/92/EC, the IECEx (International Electrotechnical Commission System for Certification to Standards Relating to Equipment for Use in Explosive Atmospheres), an international certification scheme that ensures equipment used in explosive atmospheres meets global safety standards or the NEC (National Electrical Code) and CEC (Canadian Electrical Code), which provides guidelines for the safe installation and operation of electrical equipment in hazardous locations. The NEC applies in the United States, while the CEC applies in Canada.

This compliance ensures that the system can be safely used in hazardous environments where there is a risk of explosions, such as chemical plants, oil refineries, and mining operations. By adhering to these safety standards, the system mitigates the risk of ignition from electrical components, protecting both the equipment and personnel from potential harm.

The implementation options for achieving explosion protection compliance include several methods. One option is to use intrinsically safe design principles, which limit the electrical and thermal energy available for ignition. This involves selecting components and designing circuits that operate safely within defined limits. Another option is to employ explosion-proof enclosures that can withstand and contain any internal explosions, preventing them from spreading to the surrounding environment. Further, the system can incorporate protective features like pressure relief devices, gas detection sensors, and temperature controls to enhance safety.

In an embodiment of the invention, in the modular system for identification sensing the sensor may be one of the following: optical sensing device, identification device, automatic identification device, environmental sensing device, motion sensing device, position sensing device, infrared sensing device, biometric sensing device, data capture device, RFID-reader, barcode scanner, fingerprint sensor, QR code scanner, optical character recognition scanner.

Thus, the system can be adapted to diverse applications, while allowing users to select the most appropriate sensor for their specific needs. The modular design allows for upgrades and scalability. This provides future-proofing as technology evolves.

In an embodiment of the invention, the modular system for identification sensing may further comprise a trigger arranged on the holding device, and the trigger may interface with the sensor via a USB-C cable connection or wirelessly through AIDC or a Hall effect sensor.

The inclusion of a trigger allows users to activate or deactivate the sensor, providing better control over the system's operation. With the trigger placed on the holding device provides quick access to the trigger and enables the user to respond to changes and capture data quicker.

A USB-C cable connection refers to a connection using a USB-C (Universal Serial Bus Type-C) cable. This type of cable has a reversible connector that can be plugged in either way, eliminating the hassle of finding the correct orientation. USB-C cables support high-speed data transfer, power delivery, and video output.

Automatic Identification and Data Capture (AIDC) refers to technologies used to automatically identify objects, collect data, and enter that data into computer systems without human intervention. When used wirelessly, AIDC can include technologies like RFID (Radio Frequency Identification), NFC (Near Field Communication), and Bluetooth. This enables seamless and efficient communication between devices without the need for physical connections.

A Hall effect sensor is a device that detects the presence of a magnetic field and converts it into an electrical signal. When used wirelessly, it can be part of a system that responds to magnetic fields to activate or deactivate functions.

A Hall effect sensor used wirelessly as a trigger interface in the modular system for identification sensing works by detecting magnetic fields and converting this detection into an electrical signal. When a magnetic field is present near the Hall effect sensor, it triggers the sensor to send a signal to the sensor of the identification system.

Offering both USB-C cable and wireless options ensures flexible and reliable connections based on the user preferences and application needs. The USB-C cable connection and wireless options ensure compatibility with a wide range of sensors and devices.

Furthermore, the invention proposes a use of a modular system for identification sensing, comprising:
- a sensor comprising an AIDC unit,
- a holding device configured to inherently and removably accommodate different sensor designs,
- a mobile device comprising a user interface, a gateway, and an AIDC unit,
- wherein the holding device holds the sensor and the mobile device,
- wherein the holding device comprises a removably attachable grip element,
- wherein the holding device is further configured to inherently and removably accommodate different mobile device designs,
- wherein the sensor and the mobile device are configured to communicate via the AIDC unit,
- wherein data is exchanged from the sensor to the mobile device via AIDC, and from the mobile device to the gateway, and vice versa,
- and wherein the user interface of the mobile device functions as a user interface for the modular system.

The features and aspects described in relation to the modular system for identification sensing are equally applicable to the use of a modular system for identification sensing, and vice versa.

Furthermore, the invention proposes a method for identification sensing, comprising the steps of:
- providing a modular system (1) that includes:
   - a sensor comprising an AIDC unit,
   - a holding device configured to inherently and removably accommodate different sensor designs and comprising a removably attachable grip element,
- assembling the modular system by:
   - placing the sensor into the holding device,
   - removably attaching a grip element to the holding device.
- performing identification sensing using the modular system.

With this, different sensor designs can be accommodated. Users can select and change sensors and grip elements based on their needs, ensuring optimal performance while performing the method for identification sensing.

The system is designed for quick and simple assembly, with sensors and grip elements that can be easily placed and removed, reducing downtime and enhancing productivity.

The removable grip element ensures comfortable handling, reducing user fatigue and improving precision. The system can be easily upgraded or modified by swapping out sensors or grip elements, making it scalable and future-proof as new technologies emerge.

The assembly method improves operational efficiency, enabling faster and more accurate identification sensing. The modularity of the system reduces the need for multiple separate devices, leading to cost savings in equipment and maintenance.

In an embodiment of the invention, in the method for identification sensing, wherein
- the modular system may further include a mobile device comprising a user interface, a gateway, and an AIDC unit,
- the holding device may further be configured to inherently and removably accommodate different mobile device designs,
- the method may further include the steps of
   - further assembling the modular system by:
      - placing the mobile device into the holding device,
   - establishing communication between the sensor and the mobile device via their respective AIDC units.
   - exchanging data by:
      - transmitting data from the sensor to the mobile device via AIDC and vice versa,
      - forwarding data from the mobile device to the gateway and vice versa,
   - utilizing the user interface of the mobile device as the user interface for the modular system.

With this, the holding device securely holds the mobile device, ensuring stable operation and reducing the risk of damage, while freeing one hand for other tasks. It provides flexibility and compatibility with various mobile devices, offering investment security by adapting to new smartphones and ensuring manufacturer independence.

The sensor and mobile device communicate via Automatic Identification and Data Capture (AIDC) units, ensuring efficient and secure data transfer. This connection protects data from interception or tampering, maintaining data integrity and confidentiality.

The mobile device's user interface allows for easy interaction and control, providing a good user experience and reducing the need for extra training. It can display real-time data, offer feedback, and guide users through processes. Customization options allow users to tailor the system to their needs.

Furthermore, the invention proposes a method for manufacturing a holding device suitable for use with a modular system for identification sensing comprising the steps of
- providing a holding device configured to inherently and removably accommodate different sensor designs, where the sensors include an AIDC unit, and configured to inherently and removably accommodate different mobile device designs, where the mobile device includes a user interface, a gateway, and an AIDC unit,
- providing a removably attachable grip element,
- ensuring that the holding device is configured to enable communication between the sensor and the mobile device via their AIDC units,
- ensuring that the holding device is configured to facilitate data exchange by ensuring the design allows for data transmission from the sensor to the mobile device via AIDC, and subsequently from the mobile device to the gateway, and vice versa,
- ensuring that the holding device is configured to facilitate the use of the user interface of the mobile device as the user interface for both the sensor and the mobile device.

Furthermore, the invention proposes a holding device preferably suitable for use with a modular system and configured for identification sensing, comprising a removably attachable grip element, further configured to
- inherently and removably accommodate different sensor designs, where the sensors include an AIDC unit,
- inherently and removably accommodate different mobile device designs, where the mobile devices include a user interface, a gateway, and an AIDC unit,
- hold both the sensor and the mobile device, thus facilitating communication between them via their AIDC units,
- facilitate an exchange of data from the sensor to the mobile device via AIDC, and subsequently from the mobile device to the gateway, and vice versa,
- facilitate the use of the user interface of the mobile device as the user interface for both the sensor and the mobile device.

The features and aspects described in relation to the modular system for identification sensing are equally applicable to the holding device, where applicable.

The steps of the method described herein are not required to be performed in the specific sequence listed unless explicitly stated otherwise. Certain steps may be executed concurrently or in parallel, depending on the implementation. Additionally, one or more steps may be optional, and their inclusion may vary based on the specific application. Steps that are functionally dependent on each other must follow the required sequence, while independent steps may be performed in any order. Furthermore, the method may include additional steps not explicitly described, or variations of the described steps, provided such steps or variations achieve substantially the same result.

Directional terms such as 'left,' 'right,' 'top,' 'bottom,' 'front,' and 'back' are used herein for illustrative purposes and are not intended to limit the scope of the invention. These terms are defined relative to the orientation of the device as illustrated and may vary depending on the context of use. Similarly, references to specific positions, orientations, or configurations, as well as optional components, are intended to describe illustrative examples and are not limiting. The invention may include variations, modifications, or additional features that achieve the same or equivalent function.

### BRIEF DESCRIPTION OF THE DRAWINGS

In the following, the invention will be described in further detail with reference to the accompanying drawings, wherein:
- FIG. 1: depicts a modular system for identification sensing, and
- FIG. 2: shows a sensor, and
- FIG. 3: shows a modular system for identification sensing with a sensor and a mobile device.

Identical parts are labelled by the same reference signs.

### DETAILED DESCRIPTION

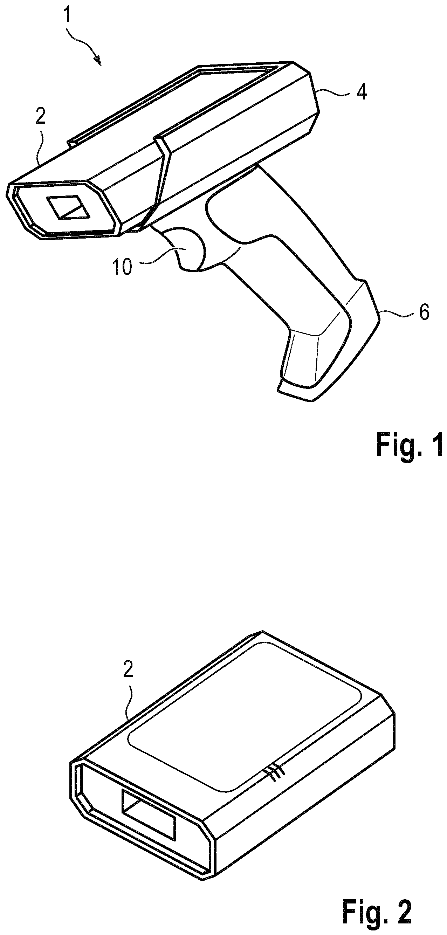

The invention relates to a modular system for identification sensing 1 as depicted in FIG. 1.

The modular system 1 for identification sensing comprises a sensor 2 with an Automatic Identification and Data Capture (AIDC) unit (as depicted in FIG. 2), and a holding device 4 designed to inherently and removably accommodate different sensor designs. The holding device 4 securely holds the sensor 2 and includes a removably attachable grip element 6 for improved ergonomics and handling.

Additionally, the modular system 1 may include a mobile device 8 equipped with a user interface, a gateway, and an AIDC unit. The holding device 4 is then further configured to inherently and removably accommodate the mobile device 8 and further mobile device 8 designs.

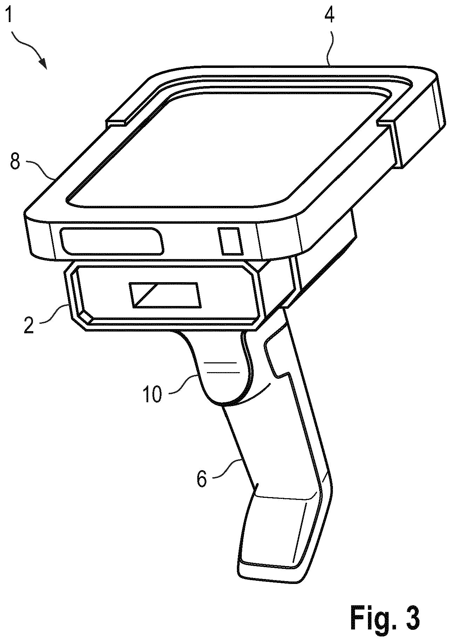

It securely holds the mobile device 8 as well, as it is depicted in FIG. 3. The sensor 2 and the mobile device 8 communicate with each other through their respective AIDC units, enabling seamless data exchange and integration.

The holding device is further subdivided into a part configured to hold the sensor 2 and another configured to hold the mobile device 8, which may be joined using a detachable connection. This configuration allows for easy assembly and disassembly of the system, enhancing its modularity and versatility. It may enable users to quickly switch between different sensors and mobile devices as needed.

The gateway of the mobile device may be a WLAN and/or WWAN gateway, providing flexible connectivity options for data transmission. The AIDC unit of the sensor may be a short-range wireless technology-enabled unit, preferably a Bluetooth low energy AIDC unit, which ensures efficient and low-power communication. Similarly, the AIDC unit of the mobile device may be a short-range wireless technology-enabled unit, preferably a Bluetooth low energy AIDC unit, allowing for seamless data exchange between the sensor and the mobile device.

The grip element of the holding device may have a pistol grip shape configured to facilitate handling of the modular system. The system may comply with explosion protection standards/regulations. The sensor may be one of the following: an optical sensing device, identification device, automatic identification device, environmental sensing device, motion sensing device, position sensing device, infrared sensing device, biometric sensing device, data capture device, RFID reader, barcode scanner, fingerprint sensor, QR code scanner, or optical character recognition scanner.

The modular system may further comprise a trigger arranged on the holding device, which may interface with the sensor via a USB-C cable connection or wirelessly through AIDC or a Hall effect sensor.

Additionally, the system may be powered by its own power supply and operate wirelessly in its operational state. The sensor 2 may be charged inductively on the holding device 4 or conductively through the holding device 4. The sensor 2 may be removably mounted on one holding device 4, while the mobile device 8 may be removably mounted on another holding device 4. The sensor 2 and the mobile device 8 may communicate with each other via NFC units, ensuring efficient and secure data exchange.

A method for identification sensing comprises the steps of providing the modular system 1 and assembling the latter, which involves placing the sensor 2 into the holding device 4 and removably attaching a grip element 6 to the holding device 4.

In some cases the modular system 1 further includes the mobile device 8 comprising a user interface, a gateway, and an AIDC unit and thus the assembling further includes placing the mobile device 8 into the holding device 4.

The holding device 4 is then further configured to inherently and removably accommodate different mobile device 8 designs. The method further includes the steps of establishing communication between the sensor 2 and the mobile device 8 via their respective AIDC units, exchanging data by transmitting data from the sensor 2 to the mobile device 8 via AIDC and vice versa, forwarding data from the mobile device 8 to the gateway and vice versa, and utilizing the user interface of the mobile device 8 as the user interface for the modular system 1.

Identification sensing is then performed using the modular system 1.

A method for manufacturing the holding device suitable for use with a modular system for identification sensing 1, comprises the step of providing the holding device 4 and the removably attachable grip element 6. With this, it must be ensured that the holding device 4 is configured to enable communication between the sensor 2 and the mobile device 8 via their AIDC units, and that the holding device 4 is configured to facilitate data exchange by ensuring the design allows for data transmission from the sensor 2 to the mobile device 8 via AIDC, and subsequently from the mobile device 8 to the gateway, and vice versa. Finally, it must be ensured in the method that the holding device 4 is configured to facilitate the use of the user interface of the mobile device 8 as the user interface for both the sensor 2 and the mobile device 8.

### List of abbreviations:

| | |
|---|---|
| Automatic Identification and Data Capture | AIDC |
| Wireless Local Area Network | WLAN |
| Wireless Wide Area Network | WWAN |
| Bluetooth Low Energy | BLE |
| | |
| | |
| | |
| | |
| | |
| | |
| | |
| | |
| | |
| | |
| | |

### LIST OF REFERENCE SIGNS

| | |
|---|---|
| Modular system | 1 |
| Sensor | 2 |
| Holding device | 4 |
| Grip element | 6 |
| Mobile device | 8 |
| Trigger | 10 |

## Claims

1. A modular system (1) for identification sensing, comprising
- a sensor (2) comprising an AIDC (Automatic Identification and Data Capture) unit,
- a holding device (4) configured to inherently and removably accommodate different sensor (2) designs,
wherein the holding device (4) holds the sensor (2), and
wherein the holding device (4) comprises a removably attachable grip element (6).

2. The modular system (1) for identification sensing according to claim 1, further comprising
a mobile device (8) comprising a user interface, a gateway and an AIDC unit,
wherein the holding device (4) is further configured to inherently and removably accommodate different mobile device (8) designs,
wherein the holding device (4) is configured to hold the mobile device (8), and
wherein the sensor (2) and the mobile device (8) are configured to communicate via AIDC units.

3. The modular system (1) for identification sensing according to claim 2,
wherein the holding device (4) is further subdivided into a part configured to hold the sensor (2) and another configured to hold the mobile device (8), which are joined using a detachable connection.

4. The modular system (1) for identification sensing according to claim 2 or 3,
wherein the gateway is a WLAN (Wireless Local Area Network) and/or WWAN (Wireless Wide Area Network) gateway.

5. The modular system (1) for identification sensing according to any one of the preceding claims,
wherein the AIDC unit of the sensor (2) is a short-range wireless technology-enabled AIDC unit, preferably a Bluetooth low energy AIDC unit.

6. The modular system (1) for identification sensing according to claim 2, 3 or 4,
wherein the AIDC unit of the mobile device (8) is a short-range wireless technology -enabled AIDC unit, preferably a Bluetooth low energy AIDC unit.

7. The modular system (1) for identification sensing according to any one of the preceding claims,
wherein the grip element (6) of the holding device (4) has a pistol grip shape configured to facilitate the handling of the modular system (1).

8. The modular system (1) for identification sensing according to any one of the preceding claims,
wherein the system complies with explosion protection standards / regulation.

9. The modular system (1) for identification sensing according to any one of the preceding claims,
wherein the sensor (2) is one of the following:
optical sensing device, identification device, automatic identification device, environmental sensing device, motion sensing device, position sensing device, infrared sensing device, biometric sensing device, data capture device, RFID-reader, barcode scanner, fingerprint sensor, QR code scanner, optical character recognition scanner.

10. The modular system (1) for identification sensing according to any one of the preceding claims,
further comprising a trigger (10) arranged on the holding device (4), and
wherein the trigger (10) interfaces with the sensor (2) via a USB-C cable connection or wirelessly through AIDC or a Hall effect sensor.

11. Use of a modular system (1) for identification sensing, comprising:
- a sensor (2) comprising an AIDC unit,
- a holding device (4) configured to inherently and removably accommodate different sensor (2) designs,
- a mobile device (8) comprising a user interface, a gateway, and an AIDC unit,
- wherein the holding device (4) holds the sensor (2) and the mobile device (8),
- wherein the holding device (4) comprises a removably attachable grip element (6),
- wherein the holding device (4) is further configured to inherently and removably accommodate different mobile device (8) designs,
- wherein the sensor (2) and the mobile device (8) are configured to communicate via the AIDC unit,
- wherein data is exchanged from the sensor (2) to the mobile device (8) via AIDC, and from the mobile device (8) to the gateway, and vice versa,
- and wherein the user interface of the mobile device (8) functions as a user interface for the modular system (1).

12. A method for identification sensing, comprising the steps of:
- providing a modular system (1) that includes:
- a sensor (2) comprising an AIDC unit,
- a holding device (4) configured to inherently and removably accommodate different sensor (2) designs and comprising a removably attachable grip element (6),
- assembling the modular system (1) by:
- placing the sensor (2) into the holding device (4),
- removably attaching a grip element (6) to the holding device (4).
- performing identification sensing using the modular system (1).

13. A method for identification sensing according to claim 12, wherein
- the modular system (1) further includes a mobile device (8) comprising a user interface, a gateway, and an AIDC unit,
- the holding device (4) is further configured to inherently and removably accommodate different mobile device (8) designs,
- the method further includes the steps of
- further assembling the modular system (1) by:
- placing the mobile device (8) into the holding device (4),
- establishing communication between the sensor (2) and the mobile device (8) via their respective AIDC units,
- exchanging data by:
- transmitting data from the sensor (2) to the mobile device (8) via AIDC and vice versa,
- forwarding data from the mobile device (8) to the gateway and vice versa,
- utilizing the user interface of the mobile device (8) as the user interface for the modular system (1).

14. A method for manufacturing a holding device (4) suitable for use with a modular system (1) for identification sensing according to any one of claims 1 to 10, comprising the steps of
- providing a holding device (4) configured to inherently and removably accommodate different sensor (2) designs, where the sensors (2) include an AIDC unit, and configured to inherently and removably accommodate different mobile device (8) designs, where the mobile device (8) includes a user interface, a gateway, and an AIDC unit,
- providing a removably attachable grip element (6),
- ensuring that the holding device (4) is configured to enable communication between the sensor (2) and the mobile device via their AIDC units,
- ensuring that the holding device (4) is configured to facilitate data exchange by ensuring the design allows for data transmission from the sensor (2) to the mobile device (8) via AIDC, and subsequently from the mobile device (8) to the gateway, and vice versa,
- ensuring that the holding device (4) is configured to facilitate the use of the user interface of the mobile device (8) as the user interface for both the sensor (2) and the mobile device (8).

15. A holding device (4) preferably suitable for use with a modular system (1) according to any one of claims 1 to 10 and configured for identification sensing, comprising a removably attachable grip element (6), further configured to
- inherently and removably accommodate different sensor (2) designs, where the sensors (2) include an AIDC unit,
- inherently and removably accommodate different mobile device (8) designs, where the mobile devices (8) include a user interface, a gateway, and an AIDC unit,
- hold both the sensor (2) and the mobile device (8), thus facilitating communication between them via their AIDC units,
- facilitate an exchange of data from the sensor (2) to the mobile device (8) via AIDC, and subsequently from the mobile device (8) to the gateway, and vice versa,
- facilitate the use of the user interface of the mobile device (8) as the user interface for both the sensor (2) and the mobile device (8).
